# EUROPÄISCHE PATENTANMELDUNG

(11) **EP 3 705 871 A1**
(43) Veröffentlichungstag der Anmeldung: **09.09.2020**
(21) Anmeldenummer: 19161657.2
(22) Anmeldetag: 08.03.2019
(51) Int. Cl.: G01N 15/06, G01M 15/10

(54) **SENSOR ODER SENSORELEMENT, SENSORSYSTEM, VERFAHREN ZUR HERSTELLUNG UND VERWENDUNG**

(71) Anmelder: Heraeus Nexensos GmbH, 63801 Kleinostheim (DE)
(72) Erfinder: PITZIUS, Dr., Peter, 63801 Kleinostheim (DE); DIETMANN, Stefan, 63801 Kleinostheim (DE); WIENAND, Dr., Karlheinz, 63801 Kleinostheim (DE); LAMMARCK, Christian, 63801 Kleinostheim (DE); ASMUS, Dr., Tim, 63801 Kleinostheim (DE); NICK, Dr., Christoph, 63801 Kleinostheim (DE)
(74) Vertreter: Kilchert, Jochen

(57) **Zusammenfassung**

Die Erfindung betrifft einen Sensor oder ein Sensorelement zur Detektion elektrisch leitfähiger und/oder polarisierbarer Partikel, insbesondere zur Detektion von Rußpartikeln, umfassend ein Substrat (10) aufweisend eine Ober- und eine Unterseite, wobei auf der Oberseite des Substrats wenigstens eine Widerstandsmessstruktur (11) zur Detektion der Partikel und wenigstens zwei Hochspannungselektroden (12, 13) zur Erzeugung eines elektrischen Feldes angeordnet sind, wobei die Widerstandsmessstruktur (11) von den Partikeln in einem Anströmbereich (14) des Substrates (10) anströmbar ist und die Hochspannungselektroden (12, 13) in einer Ebene oberhalb der Widerstandsmessstruktur (11) angeordnet sind, dadurch gekennzeichnet, dass die Hochspannungselektroden (12, 13) als lonisator zur Erzeugung eines die Partikel zumindest teilweise ionisierenden, elektrischen Feldes ausgebildet sind und elektrisch voneinander isoliert sind.

## Beschreibung

Die Erfindung betrifft einen Sensor oder ein Sensorelement, ein Sensorsystem, ein Verfahren zur Herstellung des Sensors oder des Sensorelements und die Verwendung des Sensors oder des Sensorelements. Ein Sensor mit den Merkmalen des Oberbegriffs des Anspruchs 1 ist beispielsweise aus EP 2 426 477 A2 bekannt.

Im Stand der Technik sind Sensoren zur Partikeldetektion bekannt.

In DE 102 44 702 A1 ist ein Sensor zur Detektion von Stoffen in einem Fluidstrom beschrieben, der zwei voneinander beabstandete Messelektroden umfasst, die dem zu untersuchenden Verbrennungsabgas ausgesetzt sind. Eine der Elektroden ist mit einer Hochspannungsquelle verbunden, sodass an den Messelektroden eine Spannung zwischen 1 kV und 10 kV anliegt.

Zwischen den Messelektroden kommt es zu dielektrisch behinderten Entladungen, wobei der zwischen den Messelektroden auftretende Strom mit der Anzahl der im Gasraum zwischen den Messelektroden vorhandenen Partikeln korreliert ist.

DE 10 2017 21 0 318 A1 beschreibt einen Rußsensor enthaltend eine Elektrodenspitze, die mit einem Dielektrikum beschichtet ist, um die Degradation der Spitze bei der Coronaentladung zur Ionisation der Rußpartikel zu verlangsamen.

Aus dem Stand der Technik ist bekannt, dass die Konzentration von leitfähigen Teilchen, beispielsweise Rußpartikeln in einem Abgas durch Messung der durch Teilchenanlagerung hervorgerufenen Änderung der elektrischen Eigenschaften von zwei oder mehreren kammartig ineinandergreifenden metallischen Elektroden (interdigitales Elektrodensystem) gemessen werden kann. Eine steigende Konzentration der sich auf der Sensoroberfläche anlagernden Teilchen führt zu einer Widerstands- bzw. Spannungsänderung zwischen den Elektroden. Bei einer konstant angelegten Spannung geht dies mit einer Änderung des Stromflusses einher. Zur Bestimmung der Teilchenkonzentration bzw. des Teilchenmassenstroms wird die Änderung des Stromes bzw. die Verringerung des Widerstandes des Elektrodensystems gemessen und mit der angelagerten Teilchenmasse korreliert. Alternativ dazu kann die angelagerte Teilchenmasse auch durch die Definition eines Schwellwertes (Auslöseschwelle) und Messung einer Sammelzeit bis zum Erreichen dieses Schwellwertes bestimmt werden. Sensoren, die auf einem derartigen Prinzip beruhen, welches als sammelndes Prinzip einzuordnen ist, werden als resistive Partikelsensoren bezeichnet. Zur Regeneration des Sensorelementes wird das Sensorelement bisher mit Hilfe einer Heizvorrichtung von den angelagerten Teilchen befreit.

Derartige Sensoren sind in DE 101 49 333 A1 sowie in der WO 2003/006976 A2 beschrieben.

DE 10 2013 110 291 A1 beschreibt einen resistiven Rußsensor, bei dem die zwei interdigitalen Kammelektroden (IDK-Struktur) aus zwei ineinandergreifenden Heizwendeln bestehen und einen integrierten Thermosensor enthalten.

EP 2 120 043 A1 beschreibt einen Teilchensensor, bei dem die Teilchen eines Teilchenstroms, insbesondere eines Abgases, mittels einer Entladung ionisiert werden und die geladenen Partikel von einer Kollektorelektrode aufgefangen und kapazitiv nachgewiesen werden.

EP 2 120 044 A1 beschreibt einen Teilchensensor bei dem die lonisationselektrode (corona discharge) über der Sensoreinheit positioniert ist. Der Nachweis der Teilchen auf der Kollektorelektrode erfolgt über Impedanzänderungen zu einer unter der Kollektorelektrode befindlichen Messelektrode.

JP 2010 210 538 A beschreibt einen Teilchensensor bestehend aus einer IDK-Struktur, die sich in einem Plattenkondensator befindet. Die geladenen Teilchen werden durch Anlegen einer Hochspannung an den Kondensator elektrostatisch auf die IDK-Struktur gezogen.

US 2014/0069169 A1 beschreibt eine auf Hochspannung gelegte Elektrode, die sich in einem Strom aus Reinstgas befindet und die Gasmoleküle mittels Corona-Entladung ionisiert. Der Gasstrom ionisierter Moleküle wird mit dem Partikel enthaltenden Gasstrom gemischt. Dabei übertragen die ionisierten Gasmoleküle ihre Ladung auf die Partikel. Durch Ladungsmessung an einer nachgeschalteten Ionenfalle wird auf die Partikelmenge im Gasstrom rückgeschlossen.

EP 2 426 477 A2 bildet den nächstkommenden Stand der Technik und beschreibt einen Teilchensensor bestehend aus einer IDK-Struktur mit Hochvoltelektroden, die über der IDK-Struktur positioniert sind. Die Hochvoltelektroden liegen auf gleichem Potential und erzeugen zusammen mit der unterhalb der IDK-Struktur gelegenen Gegenelektrode ein elektrisches Feld, um den Partikelstrom auf die IDK-Struktur zu lenken. Die Gegenelektrode fungiert damit als Saugelektrode.

Die bekannten Rußsensoren weisen eine geringe Empfindlichkeit auf. Bei der Entwicklung solcher Sensoren besteht generell ein Zielkonflikt, da diese Sensoren in aggressiver Umgebung, bspw. im Abgasstrang eines Kraftfahrzeugs eingesetzt werden und entsprechend geschützt und robust sein müssen. Andererseits ist eine möglichst hohe Messgenauigkeit gefordert.

Der Erfindung liegt die Aufgabe zugrunde, einen Sensor oder ein Sensorelement der eingangs genannten Art dahingehend zu verbessern, dass dieser eine möglichst kurze Ansprechzeit, eine möglichst hohe Messgenauigkeit und eine möglichst lange Standzeit, beispielsweise im Abgasstrang eines Kraftfahrzeugs aufweist. Der Erfindung liegt die Aufgabe zugrunde, ein Sensorsystem mit einem derartigen Sensor oder Sensorelement, ein Verfahren zur Herstellung eines derartigen Sensors oder Sensorelements und die Verwendung eines derartigen Sensors oder Sensorelements anzugeben.

Erfindungsgemäß wird die Aufgabe durch einen Sensor oder ein Sensorelement mit den Merkmalen des Patentanspruchs 1 gelöst. Mit Blick auf das Sensorsystem, das Herstellungsverfahren und die Verwendung wird die Aufgabe erfindungsgemäß durch die Patentansprüche 18, 19 und 20 gelöst.

Konkret wird die Aufgabe durch einen Sensor oder ein Sensorelement zur Detektion elektrisch leitfähiger und/oder polarisierbarer Partikel umfassend ein Substrat gelöst, das eine Ober- und eine Unterseite aufweist. Auf der Oberseite des Substrats sind wenigstens eine Widerstandsmessstruktur zur Detektion der Partikel und wenigstens zwei Hochspannungselektroden zur Erzeugung eines elektrischen Feldes angeordnet. Die Widerstandsmessstruktur ist von den Partikeln in einem Anströmbereich des Substrates anströmbar. Die Hochspannungselektroden sind in einer Ebene oberhalb der Widerstandsmessstruktur angeordnet. Erfindungsgemäß sind die Hochspannungselektroden als lonisator zur Erzeugung eines die Partikel zumindest teilweise ionisierenden, elektrischen Feldes ausgebildet und elektrisch voneinander isoliert.

Das Sensorelement ist ein Bauteil, das direkt in der Messumgebung, beispielsweise im Abgastrakt eingesetzt wird und physikalisch in Wechselwirkung mit den zu messenden Größen, hier mit den Partikeln, tritt. Das Sensorelement fungiert als Messfühler, der mit einer Stromversorgung und zur Signalübertragung mit anderen Bauteilen verbunden wird. Wenn in der Anmeldung der Begriff Sensor verwendet wird, so ist damit auch ein Sensorelement gemeint und offenbart.

Der Sensor ist insbesondere zur Detektion von Rußpartikeln, insbesondere im Abgasstrang eines Kraftfahrzeugs, geeignet. Andere Anwendungsmöglichkeiten sind denkbar. Da die Partikelmessung auf einer Widerstandsänderung der Widerstandsmessstruktur beruht, wird der Sensor auch als resistiver Sensor, insbesondere als resistiver Rußsensor, bezeichnet. Die Widerstandsmessstruktur weist mindestens zwei voneinander elektrisch isolierte Elektroden auf. Bevorzugt werden diese Elektroden als wenigstens zwei ineinandergreifende kammartige Elektroden ausgebildet. An diesen ist eine elektrische Spannung von wenigen Volt angelegt. Entlang dem sich zwischen den Elektroden ausbreitendem Feld lagern sich geladene oder polarisierte Partikel an. Im Messbetrieb werden die beiden voneinander elektrisch isolierten Elektroden durch die Ablagerung der Partikel überbrückt, sodass der Widerstand in der Widerstandsmessstruktur verändert wird.

Die Erfindung hat den Vorteil, dass der Sensor einerseits kompakt und robust ist und andererseits eine hohe Messgenauigkeit und Empfindlichkeit aufweist. Dieser Vorteil wird durch die Kombination der Widerstandsmessstruktur mit den als lonisator fungierenden Hochspannungselektroden erreicht, die in einer Ebene oberhalb, angeordnet sind. Die Hochspannungselektroden sind elektrisch voneinander isoliert, sodass unterschiedliche Spannungspotenziale zwischen den Hochspannungselektroden im Messbetrieb angelegt werden können. Beim Anlegen einer Hochspannung an die Hochspannungselektroden wird überraschenderweise die Empfindlichkeit der Widerstandsmessstruktur erhöht. Man nimmt an, dass durch das elektrische Feld Gasmoleküle ionisiert werden, wobei die Gasmoleküle ihre Ladung auf die Partikel übertragen. Als Folge, so die Vorstellung, steigen die Anzahl bzw. die Konzentration der ionisierten Partikel beim Anlegen einer Hochspannung an. Die erhöhte Anzahl der ionisierten Partikel trägt dazu bei, dass die Ansprechzeit des Sensors verkürzt wird. Eine größere Anzahl geladener Partikel beschleunigt die Ausbildung von Filamenten, insbesondere von Rußfilamenten, zwischen den mindestens zwei Elektroden der Widerstandsmessstruktur. Unter einem Filament ist eine Aneinanderreihung von Partikeln zu verstehen, ähnlich einer Perlenkette. Die Filamente bilden zwischen den mindestens zwei Elektroden Leiterbrücken und reduzieren den elektrischen Widerstand der Widerstandsmessstruktur. Die Veränderung des elektrischen Widerstands lässt sich durch eine Strom-Spannungs-Messung einfach nachweisen.

Die Anordnung der Hochspannungselektroden in der Ebene oberhalb der Widerstandsmessstruktur hat den Vorteil, dass in dem freien Raum zwischen den Hochspannungselektroden ein elektrisches Feld entsteht, in welchem Partikel und Gasmoleküle ionisiert werden, um anschließend auf der Widerstandsmessstruktur nachgewiesen zu werden. Um möglichst viele geladene Partikel nachzuweisen, ist es von Vorteil, den lonisator der Widerstandsmessstruktur vorgelagert in Strömungsrichtung anzuordnen. Die im elektrischen Feld ionisierten Partikel werden von der Gasströmung auf die Widerstandsmessstruktur transportiert.

Eine Positionierung des Ionisators weit genug vor der Widerstandsmessstruktur hat als weiteren Vorteil, dass eine Gasentladung zwischen Hochspannungselektroden und Widerstandsmessstruktur verhindert wird. Wenn der Abstand zwischen den freien Enden der Hochspannungselektroden kleiner ist als der Abstand der Hochspannungselektroden zum Abschluss der Widerstandsmessstruktur in Strömungsrichtung ist das elektrische Feld zwischen den Enden der Hochspannungselektroden am stärksten und Gasentladungen zur Widerstandsmessstruktur werden verhindert.

Die Widerstandsmessstruktur weist mindestens zwei voneinander elektrisch isolierte Elektroden auf, insbesondere wenigstens zwei, kammartig ineinandergreifenden Elektroden, insbesondere metallische Elektroden. Ein derartiges Elektrodensystem wir auch als interdigitale Kammelektroden oder IDK-Struktur bezeichnet.

Außerdem sind erfindungsgemäß die Hochspannungselektroden und die Widerstandsmessstruktur auf einem gemeinsamen Substrat angeordnet, wodurch sich der gewünschte kompakte und robuste Aufbau ergibt.

Im Unterschied zu den im Stand der Technik verwendeten Sammelelektroden, bei denen die Partikelkonzentration durch die übertragene Ladung bestimmt wird, hat die Verwendung der Widerstandsmessstruktur den Vorteil, dass die Partikelmessung durch eine einfache Strom-Spannung-Messung erfolgt. Im Zusammenhang mit der Widerstandsmessstruktur hat der lonisator den Vorteil, dass dieser das Wachstum der Filamente auf der Widerstandsmessstruktur fördert und somit die Empfindlichkeit und das Ansprechverhalten verbessert, ohne dass der Aufbau des Sensors verkompliziert wird. Der lonisator selbst ist durch die Hochspannungselektroden, die elektrisch voneinander isoliert sind, ebenfalls einfach aufgebaut.

Die erfindungsgemäße Anordnung unterscheidet sich von der im Stand der Technik dargestellten Anordnung dadurch, dass ein lonisator in einer Ebene oberhalb der Widerstandsmessstruktur angeordnet ist. Der lonisator besteht aus zwei Hochspannungselektroden, die auf unterschiedlichem Potenzial liegen. Partikel, die sich durch das Feld zwischen den Hochspannungselektroden bewegen, insbesondere Rußpartikel, und Gasmoleküle werden dabei ionisiert. Die Hauptachse des elektrischen Felds zwischen den zwei Hochspannungselektroden ist dabei annähernd parallel zur Oberfläche der Widerstandsmessstruktur orientiert. Die Anordnung, die in der EP 2 426 477 A2 beschrieben wird, besteht dagegen aus einer oder mehreren Hochspannungselektroden oberhalb der IDK-Struktur, die alle auf demselben Potenzial liegen und einer Gegenelektrode unterhalb der IDK-Struktur. Dieser Aufbau dient nicht der Ionisierung von Partikeln, sondern dem Ablenken bereits geladener Partikel aus dem Partikelstrom auf die Oberfläche der IDK-Struktur.

Bei den als lonisator ausgebildeten Hochspannungselektroden liegen unterschiedliche Spannungspotenziale im Messbetrieb an. Dazu sind die Hochspannungselektroden elektrisch voneinander isoliert.

Bevorzugte Ausführungsformen der Erfindung sind in den Unteransprüchen angegeben.

So können die Hochspannungselektroden jeweils gesonderte Anschlüsse aufweisen, die mit unterschiedlichen Spannungspotentialen verbindbar sind bzw. an die unterschiedliche Spannungspotentiale angelegt werden können. Dies hat den Vorteil, dass auf einfache Weise ein ionisierendes elektrisches Feld durch die Hochspannungselektroden erzeugt werden kann.

Bei einer weiteren bevorzugten Ausführungsform sind die Hochspannungselektroden in der Ebene oberhalb der Widerstandsmessstruktur in Strömungsrichtung vor der Widerstandsmessstruktur angeordnet. Dies bedeutet, dass die Partikel im Messbetrieb zuerst die Hochspannungselektroden passieren und dann in den Bereich der Widerstandsmessstruktur gelangen. Dadurch wird bewirkt, dass die gesamte wirksame Fläche der Widerstandsmessstruktur für die erhöhte Anlagerung der Filamente durch den lonisator genutzt wird. Dies führt zu einer weiteren Verbesserung der Empfindlichkeit bzw. des Ansprechverhaltens des Sensors.

Es ist auch möglich, die Hochspannungselektroden unmittelbar über der Widerstandsmessstruktur zu positionieren. Die Hochspannungselektroden sind bei dieser Ausführungsform direkt über der Widerstandsmessstruktur in der Ebene oberhalb dieser angeordnet.

Allgemein soll durch die vorstehend beschriebenen Ausführungsformen des Sensors erreicht werden, dass die Konzentration der ionisierten Partikel steigt, die sich in Form von Filamenten an der Widerstandsmessstruktur anlagern können.

Vorzugsweise ist die Widerstandsmessstruktur durch eine Passivierungsschicht geschützt. Dadurch wird bezweckt, dass der Widerstandsmessstruktur nicht von der aggressiven Umgebung, in der der Sensor verwendet wird, angegriffen wird. Geeignete Passivierungsschichten bestehen z.B. aus Metalloxiden, Glas, Keramiken oder Glaskeramiken. Die Standzeit des Sensors wird durch eine Passivierungsschicht verlängert.

Eine Verstärkung des lonisationseffektes und somit eine weitere Verbesserung der Empfindlichkeit des Sensors wird bei einer bevorzugten Ausführungsform dadurch erreicht, dass die Hochspannungselektroden einander gegenüberangeordnete freie Enden mit Spitzen zur Überhöhung des elektrischen Feldes aufweisen.

Vorzugsweise weisen die freien Enden mit Spitzen eine dielektrische Beschichtung auf, um die Elektrodenspitzen gegen Korrosion, also gegen chemische und physikalische Alterung zu schützen. Geeignete Beschichtungen für die Passivierung bestehen z.B. aus Metalloxiden, Glas, Keramiken oder Glaskeramiken. Die Standzeit des Sensors wird mit derartigen Beschichtungen verlängert.

Die angelegte Hochspannung, der Abstand der freien Enden der Hochspannungselektroden und die Ausgestaltung der Spitzen an den freien Enden bestimmen die elektrische Feldstärke des Ionisators.

Vorzugsweise beträgt die Spannung an den Hochspannungselektroden 100 V bis 10 KV. Bei der angelegten Spannung kann es sich um Gleichspannung oder Wechselspannung handeln.

Vorzugsweise weisen die freien Enden der beiden Hochspannungselektroden zueinander einen ersten Abstand von 0,3 mm bis 10 mm, insbesondere von 1 mm bis 5 mm, auf.

Es erweist sich als besonders vorteilhaft den lonisator ausreichend vor der Widerstandsstruktur zu positionieren. Der Abschluss der Widerstandsmessstruktur in Strömungsrichtung weist einen zweiten Abstand zu den Enden der Hochspannungselektrode auf. Der zweite Abstand soll größer sein als der erste Abstand, also dem Abstand der freien Enden der Hochspannungselektroden.

Die Hochspannungselektroden können durch Drähte gebildet sein. Diese Ausführungsform ist besonders einfach in der Herstellung. Vorzugsweise weisen die Drähte jeweils einen Durchmesser von 0,01 mm bis 3 mm, insbesondere von 0,02 mm bis 1 mm, insbesondere 0,03 mm bis 0,6 mm, auf. Die Spitzen der freien Enden der Drähte können einen Krümmungsradius jeweils von 0,1 µm bis 100 µm, insbesondere von 0,2 µm bis 30 µm, insbesondere 0,3 µm bis 10 µm, aufweisen. Es hat sich gezeigt, dass die vorstehend genannten Drahtgeometrien zu besonders guten Ergebnissen hinsichtlich der Messgenauigkeit führen.

Bei einer besonders bevorzugten Ausführungsform sind die Hochspannungselektroden durch zweidimensionale Elektroden gebildet. Unter zweidimensionalen Elektroden werden flache Elektroden, beispielsweise gedruckte Elektroden, verstanden, die auf das Substrat aufgebracht werden. Es versteht sich, dass zweidimensionale Elektroden eine geringe Wandstärke aufweisen, die aber im Vergleich zur Wandstärke bzw. dem Durchmesser dreidimensionaler Elektroden, wie beispielsweise die vorstehend genannten Drähte, sehr viel kleiner ist. Zweidimensionale Elektroden weisen keine räumliche Struktur wie dreidimensionale Elektroden, sondern eine flächige Struktur auf.

Die zweidimensionalen Elektroden können einzeln oder gemeinsam in die Passivierungsschicht integriert sein, wodurch einerseits die zweidimensionalen Elektroden geschützt sind und andererseits ein kompakter Sensor möglich ist.

Vorzugsweise weisen die zweidimensionalen Elektroden eine Dicke von 10 nm bis 10 µm, bevorzugt von 100 nm bis 5 µm, auf. Im Unterschied zu dreidimensionalen Elektroden sind zweidimensionale Elektroden im Wesentlichen flächig ausgebildet da die Dicke der Elektroden wesentlich geringer ausgebildet ist als ihre Länge und Breite.

Vorzugsweise weist die Widerstandsmessstruktur zwei ineinandergreifende Heizschleifen auf. Alternativ weist das Substrat mit der Widerstandsmessstruktur mindestens eine Heizschleife auf. Die Heizschleife bzw. die Heizschleifen haben den Vorteil, dass der Sensor im Betrieb gereinigt werden kann, um die Filamente und die Rußpartikel von der Widerstandsmessstruktur in zeitlichen Abständen zu entfernen.

Eine weitere Verbesserung der Empfindlichkeit des Sensors kann dadurch erreicht werden, dass bei einem weiteren Ausführungsbeispiel das Substrat eine Saugelektrode aufweist. Dadurch wird erreicht, dass die Anzahl der auf die Widerstandsmessstruktur gelenkten Partikel erhöht wird. Vorzugsweise ist die Widerstandsmessstruktur zwischen der Saugelektrode und den Hochspannungselektroden angeordnet, sodass die durch die Hochspannungselektroden ionisierten Partikel, insbesondere Rußpartikel auf die Widerstandsmessstruktur gelenkt werden.

Die Saugelektrode kann auf der Unterseite des Substrates angeordnet sein, wodurch auch bei der Variante des Sensors mit Saugelektrode ein kompakter Aufbau möglich ist.

Auf dem Substrat können weitere Komponenten angeordnet sein, wie z.B. Heizer und/oder Temperatursensoren.

Das erfindungsgemäße Sensorsystem umfasst wenigstens einen Sensor zur Detektion elektrisch leitfähiger und/oder polarisierbarer Partikel mit einem Substrat, das eine Ober- und eine Unterseite aufweist. Auf der Oberseite des Substrats sind wenigstens eine ineinandergreifende Widerstandsmessstruktur zur Detektion der Partikel und wenigstens zwei Hochspannungselektroden zur Erzeugung eines elektrischen Feldes angeordnet. Die Widerstandsmessstruktur ist von den Partikeln in einem Anströmbereich des Substrates anströmbar. Die Hochspannungselektroden sind in einer Ebene oberhalb der Widerstandsmessstruktur angeordnet. Erfindungsgemäß sind die Hochspannungselektroden als lonisator zur Erzeugung eines die Partikel zumindest teilweise ionisierenden, elektrischen Feldes ausgebildet und elektrisch voneinander isoliert. Bei dem erfindungsgemäßen Sensorsystem sind die Hochspannungselektroden an eine oder mehrere Hochspannungsquellen angeschlossen, um im Messbetrieb unterschiedliche Spannungspotentiale an die Hochspannungselektroden anzulegen.

Bei dem Verfahren zur Herstellung des erfindungsgemäßen Sensors wird die Widerstandsmessstruktur auf das Substrat aufgebracht. Die Hochspannungselektroden werden zumindest im Anströmbereich in einer Ebene oberhalb der Widerstandsmessstruktur angeordnet und fixiert.

Der erfindungsgemäße Sensor wird im Abgasstrang eines Verbrennungsmotors verwendet, um die Konzentration der Rußpartikel im Abgas des Verbrennungsmotors zu messen.

Die Erfindung wird nachstehend anhand von Ausführungsbeispielen unter Bezug auf die beigefügten schematischen Zeichnungen mit weiteren Einzelheiten näher erläutert.

In diesen zeigen
- Fig. 1: eine Aufsicht auf einen Sensor, insbesondere Rußsensor nach einem erfindungsgemäßen Ausführungsbeispiel, bei dem die Hochspannungselektroden aus Drähten gebildet sind;
- Fig. 2: eine Seitenansicht des Sensors nach Figur 1;
- Fig. 3: eine schematische Darstellung des Sensors nach Figur 1 im Messbetrieb, bei dem zwischen den Hochspannungselektroden ein ionisierendes elektrisches Feld erzeugt ist, dass durch entsprechende Feldlinien dargestellt ist;
- Fig. 4: eine schematische Darstellung eines Sensorsystems nach einem erfindungsgemäßen Ausführungsbeispiel, bei dem der Sensor nach Figur 1 mit einem Hochspannungsmodul elektrisch verbunden ist;
- Fig. 5: eine perspektivische Ansicht eines Sensors, insbesondere Rußsensors nach einem weiteren erfindungsgemäßen Ausführungsbeispiel, bei dem die Hochspannungselektroden als zweidimensionale Elektroden ausgebildet sind;
- Fig. 6: eine Detailansicht des Sensors nach Figur 5, die den Anströmbereich des Sensors zeigt;
- Fig. 7: eine schematische Aufsicht des Sensors nach Figur 5 im Bereich der Widerstandsmessstruktur und der beiden Hochspannungselektroden im Messbetrieb, wobei zwischen den Hochspannungselektroden ein ionisierendes elektrisches Feld erzeugt ist, das durch Feldlinien dargestellt ist;
- Fig. 8: einen Querschnitt durch den Sensor gemäß Figur 7;
- Fig. 9: eine vergrößerte Darstellung einer Spitze der Hochspannungselektroden gemäß Figur 7, die symmetrisch ausgebildet ist;
- Fig. 10: einen Querschnitt durch einen Sensor nach einem weiteren erfindungsgemäßen Ausführungsbeispiel, bei dem die Hochspannungselektroden als zweidimensionale Elektroden ausgebildet sind, wobei die Spitzen der Elektroden asymmetrisch sind;
- Fig. 11: eine vergrößerte Darstellung der Spitze gemäß Figur 10;
- Fig. 12: einen Querschnitt durch einen Sensor nach einem weiteren erfindungsgemäßen Ausführungsbeispiel, bei dem auf der Unterseite des Substrats eine Saugelektrode angeordnet ist und
- Fig. 13: ein Beispiel für ein Signal zur Ansteuerung der Saugelektrode.

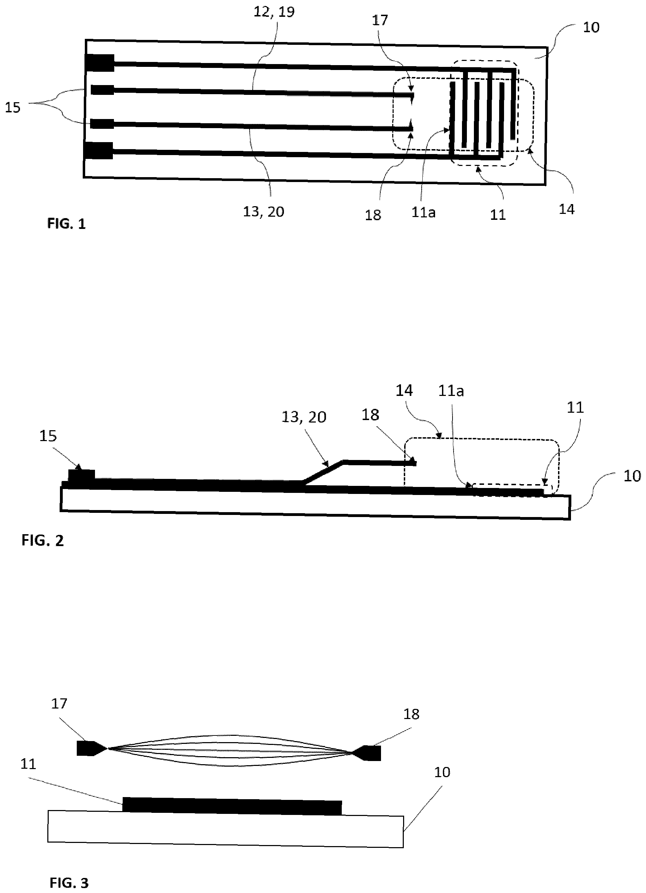

Figur 1 zeigt ein Beispiel für einen Sensor zur Detektion elektrisch leitfähiger und/oder polarisierter Partikel. Konkret handelt es sich bei dem Sensor um einen Rußsensor, der Rußpartikel im Abgas eines Verbrennungsmotors detektiert. Sinn und Zweck des Sensors ist es, die Konzentration bzw. Anzahl der Rußpartikel zu messen. Der in Figur 1 gezeigte Sensor ist hierfür besonders geeignet. Die Erfindung ist nicht auf die Messung von Rußpartikeln eingeschränkt, sondern kann auch für andere Anwendungsfälle eingesetzt werden, bei denen es auf die Detektion elektrisch leitfähiger und/oder polarisierter Partikel ankommt. Die Verwendung zur Messung der Rußpartikelkonzentration ist der bevorzugte Anwendungsfall.

Zur Befestigung der einzelnen Messkomponenten und Anordnungen ist ein Substrat 10 vorgesehen, das ausreichend groß dimensioniert ist, um die Messkomponenten und Anordnungen aufzunehmen. Bei dem Beispiel gemäß Figur 1 hat das Substrat 10 in der Aufsicht eine rechteckige, längliche Form. Andere geometrische Formen des Substrats 10 sind möglich.

Das elektrisch isolierende Substrat 10 ist ein keramisches Metalloxid-Substrat, insbesondere aufweisend Al₂O₃ und/oder Magnesiumoxid und/oder Zirkonoxid und/oder Yttriumoxid und/oder SiO₂.

Das Substrat 10 weist eine Oberseite und eine Unterseite auf. Auf der Oberseite sind die Messkomponenten angeordnet und können im Messbetrieb von den zu detektierenden Partikeln angeströmt werden. Die Messkomponenten umfassen eine Widerstandsmessstruktur 11 sowie eine erste und zweite Hochspannungselektrode 12, 13. Weitere Messkomponenten und Anordnungen sind möglich.

Als weitere Komponenten kommen bspw. Heizer und/oder Temperatursensoren in Frage.

Die Widerstandsmessstruktur 11 ist an sich bekannt und wird näher in der auf die Anmelderin zurückgehenden DE 10 2013 110 291 A1, sowie in DE 101 49 333 A1 und WO 2003/006976 A2 beschrieben. Die Widerstandsmessstruktur 11 weist mehrere, insbesondere wenigstens zwei, kammartig ineinandergreifenden Elektroden, insbesondere metallische Elektroden, auf. Eine steigende Konzentration der sich auf der Sensoroberfläche anlagernden Teilchen führt zu einer Widerstands- bzw. Spannungsänderung zwischen den Elektroden. Bei einer konstant angelegten Spannung geht dies mit einer Änderung des Stromflusses einher. Zur Bestimmung der Teilchenkonzentration bzw. des Teilchenmassenstroms wird die Änderung des Stromes bzw. die Verringerung des Widerstandes des Elektrodensystems gemessen und mit der angelagerten Teilchenmasse korreliert. Alternativ dazu kann die angelagerte Teilchenmasse auch durch die Definition eines Schwellwertes (Auslöseschwelle) und Messung einer Sammelzeit bis zum Erreichen dieses Schwellwertes bestimmt werden. Zur Regeneration des Sensors wird dieser mit Hilfe einer Heizvorrichtung von den angelagerten Teilchen befreit. Bspw. können die interdigitalen Kammelektroden (IDK-Struktur) aus zwei ineinandergreifenden Heizwendeln bestehen.

Die ineinandergreifenden Elektroden der Widerstandsmessstruktur 11 bilden die wirksame Messfläche des Sensors, die von den zu detektierenden Partikeln anströmbar ist. Die Widerstandsmessstruktur 11 ist im Anströmbereich 14 des Sensors angeordnet bzw. der Sensor ist so ausgebildet, dass die Widerstandsmessstruktur 11 im Anströmbereich 14 mit den Partikeln in Kontakt kommen kann. Mit anderen Worten ist die Widerstandsmessstruktur 11 im Anströmbereich 14 des Sensors für die Umgebung frei zugänglich.

Die ineinandergreifenden Elektroden der Widerstandsmessstruktur 11 weisen jeweils Anschlüsse für die Stromversorgung und Signalübertragung auf. Die ineinandergreifenden Elektroden der Elektrode 11 können beheizbar sein, entweder direkt oder indirekt, um die Widerstandsmessstruktur 11 bei Bedarf von den darauf abgelagerten Partikeln bzw. Filamenten durch Wärmezufuhr zu reinigen.

Ebenfalls im Anströmbereich 14 befindet sich der lonisator bestehend aus den beiden Hochspannungselektroden 12, 13.

Wie in der Figur 2 gut zu erkennen, sind in einer Ebene oberhalb der Widerstandsmessstruktur 11 eine erste und eine zweite Hochspannungselektroden 12, 13 angeordnet. Die Ebene oberhalb der Widerstandsmessstruktur 11 ist eine virtuelle Ebene, die parallel zur Oberseite des Substrats 10 verläuft. Im Beispiel gemäß Figur 1, 2 sind die Hochspannungselektroden 12, 13 als Drähte 19, 20 ausgebildet, die auf dem Substrat 10 befestigt sind. Die Hochspannungselektroden 12, 13 weisen an ihren freien Enden Spitzen 17, 18 auf, die einander gegenüber angeordnet sind. Mit anderen Worten, die Spitzen 17, 18 weisen aufeinander zu. Im Anströmbereich 14 sind die Drähte 19, 20 gekröpft, sodass zumindest die Spitzen 17, 18 der Hochspannungselektroden 12, 13 in der Ebene oberhalb der Widerstandsmessstruktur 11 angeordnet sind. Wie in der Figur 1 und Figur 2 gut zu erkennen ist, sind die Spitzen 17, 18 der Hochspannungselektroden 12, 13 in Strömungsrichtung vor der Widerstandsmessstruktur 11 angeordnet. Der Abstand der Hochspannungselektroden 12, 13 zum Abschluss der Widerstandsmessstruktur in Strömungsrichtung 11a ist größer als der Abstand der freien Enden der Hochspannungselektroden.

Aus den Figuren 1, 2 ergibt sich in der Gesamtschau, dass die Spitzen 17, 18 der Hochspannungselektroden 12, 13 sowohl in Strömungsrichtung vor der Widerstandsmessstruktur 11 als auch in der Ebene oberhalb der Widerstandsmessstruktur 11 angeordnet sind.

Die Drähte 19, 20 der Hochspannungselektroden 12, 13 sind elektrisch voneinander isoliert. Dadurch können unterschiedliche Spannungspotenziale an den einzelnen Hochspannungselektroden 12, 13 bzw. an den Drähten 19, 20 angelegt werden. Dazu weisen die Hochspannungselektroden 12, 13 jeweils gesonderte Anschlüsse 15 auf.

Wie in Figur 3 gezeigt, sind die Hochspannungselektroden 12, 13 als lonisator ausgebildet. Der lonisator ist dazu vorgesehen, ein ionisierendes elektrisches Feld auszubilden, das in Figur 3 durch entsprechende Feldlinien zwischen den Hochspannungselektroden 12, 13 dargestellt ist. Das elektrische Feld ionisiert die das elektrische Feld durchtretenden Partikel, insbesondere Rußpartikel, und lädt diese direkt oder indirekt durch ionisierte Gasmoleküle auf. Die als lonisator ausgebildeten Hochspannungselektroden 12, 13 erhöhen die Konzentration bzw. die Anzahl der geladenen Partikel, die auf der Widerstandsmessstruktur 11 abgelagert werden. Die Widerstandsmessstruktur 11 ist, wie in Figur 3 gezeigt, auf dem Substrat 10 angeordnet. Die erhöhte Anzahl geladener Partikel verbessert die Ausbildung von Filamenten, die die einzelnen ineinandergreifenden Elektroden der Widerstandsmessstruktur 11 überbrücken. Dadurch steigt die Empfindlichkeit des Sensors.

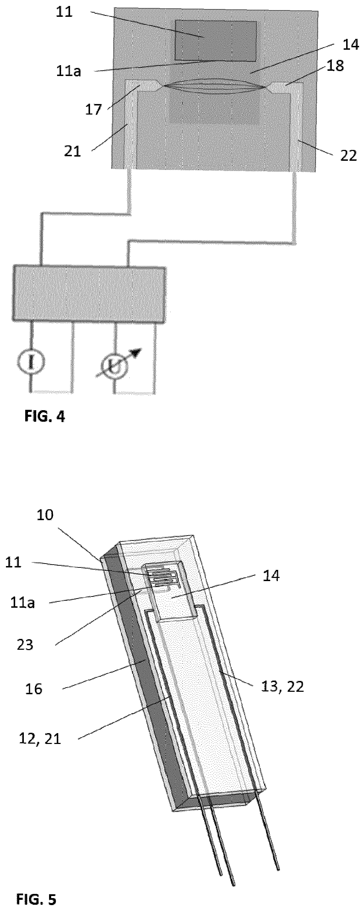

Figur 4 zeigt ein Sensorsystem zur Detektion bzw. Messung der Partikelanzahl in einem Gasvolumenstrom, das einen Sensor gemäß Figuren 1 bis 3 aufweist. Der Sensor bzw. das Sensorelement ist mit einem Hochspannungs-Modul elektrisch verbunden, das die Hochspannungselektroden 12, 13 mit unterschiedlichen Spannungspotenzialen derart beaufschlagt, dass ein ionisierendes elektrisches Feld zwischen den Hochspannungselektroden 12, 13 erzeugt wird.

Nachstehend wird ein konkretes Beispiel für einen Sensor (IDK-Struktur mit Hochspannungselektroden aus Drähten) gemäß Figur 1 bis 4 erläutert.

Auf einem Substrat 10 aus hochreinem gesinterten Aluminiumoxid (Länge 50 mm, Breite 6 mm, Höhe 1 mm) wird auf einer Seite eine Schicht aus einer Dickschichtplatinpaste mit Siebdruck aufgebracht und bei T=850°C eingebrannt. Anschließend wird eine Platinschicht mit einem Ultrakurzpulslaser zu einer interdigitalen Kammelektrode (IDK-Struktur) mit Anschlussstreifen strukturiert. Die Kammzinken jedes Kamms haben eine Länge von 4 mm, eine Breite von 100 µm und einen Abstand von 200 µm zueinander. Durch die ineinandergreifende Anordnung beträgt der Abstand der Kammzinken beider Elektrodenkämme 50 µm.

Über der IDK-Struktur sind zwei Stahldrähte 19, 20 (Durchmesser 0,5 mm) angeordnet. Der Abstand der Drahtenden zu dem in Strömungsrichtung gelegenen Abschluss der IDK-Struktur beträgt 4 mm. Die Enden der Drähte 19, 20 zeigen aufeinander und haben einen Abstand von 3 mm. Beim Anlegen einer elektrischen Hochspannung zwischen den Drähten 19, 20 entsteht ein hohes elektrisches Feld. Innerhalb des hohen elektrischen Felds findet eine Ionisation der Gasmoleküle und/oder der Rußpartikel statt. Es wird angenommen, dass vor allem Gasmoleküle ionisiert werden, die ihre Ladung dann auf ungeladene Rußpartikel übertragen.

Der Effekt der Ionisation lässt sich erhöhen, indem die Drahtenden zu Spitzen 17, 18 ausgestaltet werden. Durch die Spitzen 17, 18 kommt es an den Drahtenden zu Feldüberhöhungen. Der Radius der Drahtspitzen 17, 18 beträgt 0.1 µm - 100 µm, bevorzugt 0,2 µm bis 30 µm, besonders bevorzugt 0,3 µm bis 10 µm.

Um die Drahtspitzen vor Korrosion zu schützen, weisen diese eine dielektrische Beschichtung, bspw. eine Metalloxidschicht auf.

Die Herstellung der Spitzen 17, 18 an den Drahtenden erfolgt mit den bekannten Methoden der Drahtbearbeitung wie Drahtziehen, Pressen, Schneiden oder Scheren.

Weiterhin, aber hier der Übersichtlichkeit wegen nicht dargestellt, ist auf dem Substrat ein Heizer aufgebracht. Dieser besteht aus einer siebgedruckten Metallpaste, die nach dem Aufbringen eingebrannt wird. Der Heizer besitzt eine mäanderförmige Struktur mit zwei Anschlusskontakten an den Enden. Durch Anlegen einer Spannung an die Anschlusskontakte wird die Mäanderstruktur und damit das gesamte Substrat mit der Widerstandsmessstruktur und den Hochspannungselektroden erhitzt.

Durch die geringe thermische Masse des Gesamtsystems und der großzügig dimensionierten Ausheizleistung können bei jedem Ausheizzyklus die Rußreste auf dem gesamten Chip oxidiert werden. Somit ist eine Reinigung der Widerstandsmessstruktur 11 und der Hochspannungselektroden 12, 13 gewährleistet.

In einer weiteren hier nicht dargestellten Ausführungsform werden die beiden Elektrodenkämme jeweils aus Heizschleifen gebildet, wie in DE 10 2013 110 291 A1 beschrieben. Diese erlauben ein Aufheizen des Sensorchips während der Regenerationsphase.

In Figur 5 ist ein weiteres Ausführungsbeispiel eines Sensors gezeigt, bei dem die Hochspannungselektroden 12, 13 als zweidimensionale Elektroden 21, 22 ausgebildet sind.

Das Grundprinzip des Sensors, das anhand des Ausführungsbeispiels gemäß Figur 1 bis 4 erläutert ist, wird beibehalten. Mit anderen Worten werden im Wesentlichen die Hochspannungselektroden 12, 13 modifiziert. Konkret werden die Drähte der Figuren 1 bis 4 durch die zweidimensionalen Elektroden 21, 22 ersetzt.

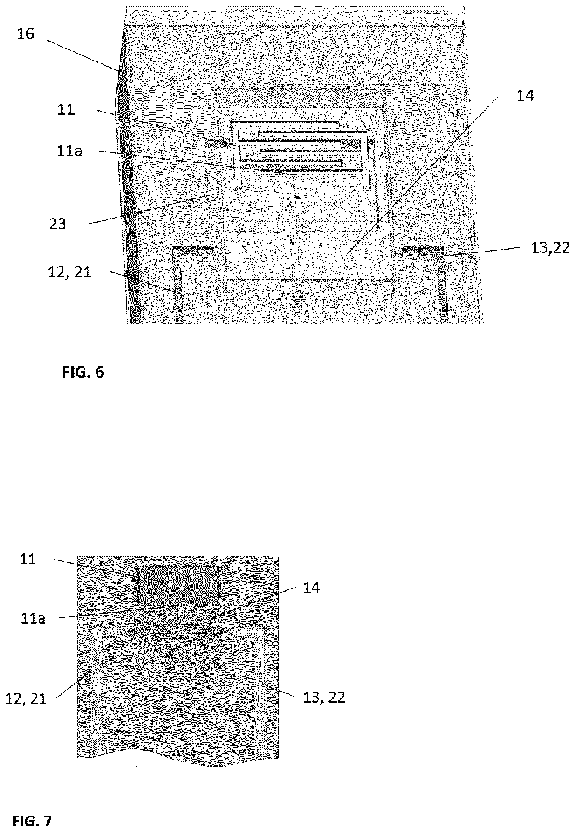

Wie in der Detailansicht gemäß Figur 6 gut zu erkennen, sind die zweidimensionale Elektroden 21, 22 in einer Passivierungsschicht 16 angeordnet, die die zweidimensionalen Elektroden 21, 22 vor der aggressiven Umgebung im Messbetrieb schützt. Der Anströmbereich 14, in dem die Widerstandsmessstruktur 11 angeordnet ist, ist durch eine Ausnehmung in der Passivierungsschicht 16 für die Anströmung durch Partikel zugänglich. Die Enden der zweidimensionalen Elektroden 21, 22 sind zur Ausbildung des elektrischen Feldes einander gegenüber angeordnet und schließen den Anströmbereich 14 ein. Weiterhin sind auch die Enden mit einer dielektrischen Beschichtung zum Schutz vor Korrosion versehen. Wie in Figur 6 zu erkennen, sind die Enden der zweidimensionalen Elektroden 21, 22 in einer Ebene oberhalb der Widerstandsmessstruktur 11 angeordnet. Bei dem Beispiel gemäß Figur 6 sind die Enden der zweidimensionalen Elektroden 21, 22 vor der Widerstandsmessstruktur 11 angeordnet.

In der Detailansicht gemäß Figur 6 ist ferner zu erkennen, dass auf der Unterseite des Substrats 10 eine Saugelektrode 23 angeordnet ist.

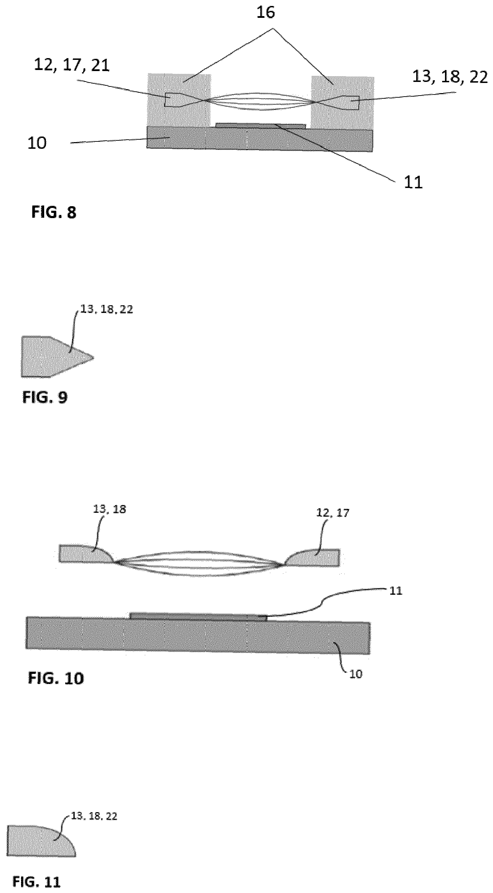

Figuren 7, 8 zeigen, dass die als zweidimensionale Elektroden 21, 22 ausgebildeten Hochspannungselektroden 12, 13 nach demselben Prinzip funktionieren, wie die in den Figuren 1 bis 4 erläuterten Hochspannungselektroden 12, 13. Zwischen den freien Enden der Hochspannungselektroden 12, 13 wird das ionisierende elektrische Feld erzeugt, das die Partikel elektrisch auflädt, die das elektrische Feld durchqueren, sodass die Anlagerung der Filamente auf der Widerstandsmessstruktur 11 verbessert wird.

Die Figuren 9 bis 11 zeigen, dass die Spitzen 17, 18 der Hochspannungselektroden 12, 13 entweder symmetrisch (Figur 9) oder asymmetrisch (Figuren 10, 11) ausgebildet sein können, wobei die asymmetrische Ausbildung insbesondere für 2-dimensionale Elektroden 21, 22 geeignet ist. Bei der asymmetrischen Ausbildung kann der äußerste Punkt der jeweiligen Spitze 17, 18 an einer der beiden Kanten (Oberkante oder Unterkante) der zweidimensionalen Elektrode angeordnet sein.

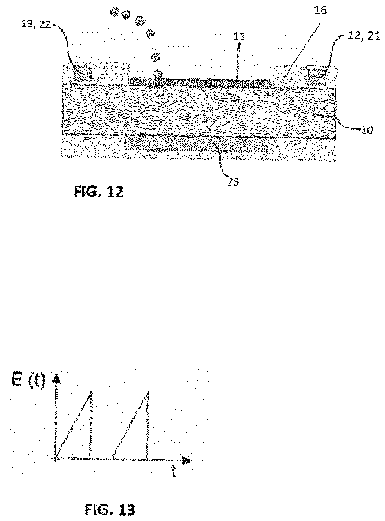

Figur 12 zeigt die Funktionsweise der Saugelektrode 23 an der Unterseite des Substrats 10, d.h. an der Seite des Substrats 10, die der Seite des Substrats 10 gegenüberliegt, auf der die Messkomponenten angeordnet sind. Die Saugelektrode lenkt die im elektrischen Feld zwischen den Hochspannungselektroden 12, 13 aufgeladenen Partikel auf die Widerstandsmessstruktur 11. Ein bevorzugtes ansteuerbares Signal für die Saugelektrode 23 ist in Figur 13 gezeigt (Sprungfunktion).

Nachstehend wird ein konkretes Ausführungsbeispiel des vorstehend beschriebenen Sensors mit einem integrierten 2D-Hochspannungselektrodenpaar erläutert.

Der Sensor, insbesondere Rußsensor, wird folgendermaßen hergestellt:
1.) Bereitstellen eines keramischen Substrats, bevorzugt Al2O3.
2.) Aufbringen von Zwischenschichten auf dem Substrat 10 zur Haftverbesserung; Einbrennen.
3.) Aufbringen einer siebgedruckten IDK-Struktur als Widerstandsmessstruktur 11 aus Platin; Einbrennen; Die IDK-Struktur wird optional mit den bekannten Mikrostrukturierungsverfahren wie Ionenstrahlätzen, Laserstrukturierung, Elektronenstrahlstrukturierung oder Photolithographie weiter bearbeitet.
   Die einzelnen Kammelektroden der IDK-Struktur sind als Heizschleifen ausgebildet.
4.) Aufbringen einer Passivierungsschicht 16 über Teilen der IDK-Struktur aus einer Glaskeramik, wobei der Anströmbereich 14 mit dem zentralen Sensorbereich der IDK-Struktur nicht abgedeckt wird; Einbrennen.
5.) Aufbringen eines Hochspannungselektrodenpaars 21, 22 auf die Glaskeramik, wobei die Enden des Hochspannungselektrodenpaars 21, 22 aufeinander zuweisen und den Anströmbereich 14 einschließen. Das zweidimensional angeordnete Hochspannungselektrodenpaar 21, 22 wird mit den klassischen Depositionsmethoden (PVD, Aufdampfen, Sputtern, Siebdruck und Einbrennen einer Pt-Paste) aufgebracht.
6.) Die 2D Elektrodenenden können optional zu Spitzen 17, 18 geformt werden, z.B. durch Laserstrukturierung, um eine Feldüberhöhung an den Enden zu erzeugen. Die gewünschte Feldüberhöhung bildet sich an den Kanten der Elektroden aufgrund der geringen Schichtdicke oft schon von selbst aus.
7.) Das 2D-Hochspannungselektrodenpaar wird mit einer Glaskeramik abgedeckt, wobei die aufeinander zuweisenden Elektrodenenden/Spitzen zum Korrosionsschutz mit abgedeckt sind.

Optional ist ein Saugelektrode 23 auf der Unterseite des Substrats 10 angeordnet.

Die Wirkung der Hochspannungselektroden wird anhand einer Rußmessung nachgewiesen.

Die Rußsensoren aus Beispiel 1 (Fig. 1-4) werden in einem Messstand getestet, der die Bedingungen simuliert, die im Abgasstrang eines Verbrennungsmotors vorherrschen.
Der Messstand besteht im Kern aus einer Messkammer durch die ein Gas-Rußgemisch annähernd laminar strömt. Das Gas-Rußgemisch kann in einer vorgeschalteten Gasmischkammer geeignet eingestellt werden, indem der Abgasstrom aus einer Verbrennungsmaschine z.B. mit zusätzlichen Gasen beaufschlagt wird. Darüber hinaus bietet der Messstand die Möglichkeit den rußbeladenen Gasstrom hinsichtlich Geschwindigkeit und Temperatur zu variieren.

In der Messkammer befindet sich der Rußsensor. Die Kontaktbereiche der IDK-Struktur inklusive der integrierten Heizer sind mit einer elektronischen Kontrolleinheit verbunden und die Spannungsbereiche der einzelnen Kammelektroden und Heizer sind jeweils unabhängig voneinander einstellbar. Die Ansteuerung der IDK-Struktur und der Hochspannungselektroden ist galvanisch voneinander getrennt.

Der Rußsensor wird mit seiner Flächennormalen in einem Winkel von 90° zum Gasstrom orientiert. Der Gasstrom trifft zunächst auf den lonisator und dann auf die IDK-Struktur. Die Kämme der IDK-Struktur sind dabei senkrecht zum Gasstrom orientiert.
Im Testbetrieb wird mit Hilfe der elektronischen Kontrolleinheit zwischen den beiden ineinandergreifenden Kammelektroden des Rußsensors der elektrische Widerstand R als Funktion der Zeit gemessen. Wenn der Widerstand eine festgelegten Schwellwert unterschreitet, wird der Ausheizzyklus gestartet. Die Ansprechzeit entspricht der Zeit zwischen dem Ende des vorherigen Ausheizzyklus und dem Unterschreiten des Schwellwerts.

Während der Rußbelegungsphase sind die Heizer abgeschaltet und Ruß setzt sich auf dem Sensor ab. Während der Rußabbrandphase werden die Heizer nach einem vorgegebenen Temperaturprofil geführt und dabei wird der Sensor regeneriert. In dieser Phase erreicht der Sensor Temperaturen von 725 - 875°C. Am Ende der Rußabbrandphase ist R größer als 1 GOhm (> 10E9Ohm).

Die Ansprechzeit reduziert sich bei Erhöhung der Hochspannung signifikant wie in Tabelle 1 dargestellt:

**Tabelle1:**

| Hochspannung U(V) | Normierte Ansprechzeit (normiert) |
|---|---|
| 0 | 1 |
| 500 | 0.72 |
| 650 | 0.58 |
| 750 | 0.56 |
| 950 | 0.36 |
| 1200 | 0.3 |
| 1330 | 0.17 |

Der Vorteil eines Ionisators ist damit gezeigt. Je höher die Ionisationsspannung, also je mehr Rußteilchen geladen werden, umso geringer ist die Ansprechzeit.

Wie aus optischen Mikroskopieaufnahmen hervorgeht, lagert sich der Ruß in Form von Filamenten zwischen den Kammelektroden der IDK-Struktur an. Die Filamentbildung erfolgt mit dem Gasstrom von der negativ gepolten Elektrode der IDK-Struktur (Widerstandsmessstruktur 11) zur positiven. Die Filamentbildung wird durch Anlegen einer Hochspannung an das Hochspannungselektrodenpaar 12, 13 gefördert. Je höher die Hochspannung, umso mehr Filamente bilden sich pro Zeiteinheit.

### Bezugszeichenliste

- 10: Substrat
- 11: Widerstandsmessstruktur
- 11a: vorderer Abschluss der Widerstandsmessstruktur in Strömungsrichtung
- 12: erste Hochspannungselektrode
- 13: zweite Hochspannungselektrode
- 14: Anströmbereich
- 15: Anschlüsse
- 16: Passivierungsschicht
- 17: erste Spitze
- 18: zweite Spitze
- 19: erster Draht
- 20: zweiter Draht
- 21: erste zweidimensionale Elektrode
- 22: zweite zweidimensionale Elektrode
- 23: Saugelektrode

## Patentansprüche

1. Sensor oder Sensorelement zur Detektion elektrisch leitfähiger und/oder polarisierbarer Partikel, insbesondere zur Detektion von Rußpartikeln, umfassend ein Substrat (10) aufweisend eine Ober- und eine Unterseite, wobei auf der Oberseite des Substrats wenigstens eine Widerstandsmessstruktur (11) zur Detektion der Partikel und wenigstens zwei Hochspannungselektroden (12, 13) zur Erzeugung eines elektrischen Feldes angeordnet sind, wobei die Widerstandsmessstruktur (11) von den Partikeln in einem Anströmbereich (14) des Substrates (10) anströmbar ist und die Hochspannungselektroden (12, 13) in einer Ebene oberhalb der Widerstandsmessstruktur (11) angeordnet sind, **dadurch gekennzeichnet, dass** die Hochspannungselektroden (12, 13) als lonisator zur Erzeugung eines die Partikel zumindest teilweise ionisierenden, elektrischen Feldes ausgebildet sind und elektrisch voneinander isoliert sind.

2. Sensor oder Sensorelement nach Anspruch 1, **dadurch gekennzeichnet, dass** die Hochspannungselektroden (12, 13) jeweils gesonderte Anschlüsse (15) aufweisen, die mit unterschiedlichen Spannungspotentialen verbindbar sind.

3. Sensor oder Sensorelement nach Anspruch 1 oder 2, **dadurch gekennzeichnet, dass** die Hochspannungselektroden (12, 13) in der Ebene oberhalb der Widerstandsmessstruktur (11) in Strömungsrichtung vor der Widerstandsmessstruktur (11) angeordnet sind.

4. Sensor oder Sensorelement nach einem der vorhergehenden Ansprüche, **dadurch gekennzeichnet, dass** die Oberseite des Substrats (10) eine Passivierungsschicht (16) aufweist, wobei die Passivierungsschicht (16) die Widerstandsmessstruktur (11) und den Anströmbereich (14) nicht bedecken.

5. Sensor oder Sensorelement nach einem der vorhergehenden Ansprüche, **dadurch gekennzeichnet, dass** die Hochspannungselektroden (12, 13) einander gegenüberangeordnete freie Enden zur Überhöhung des elektrischen Feldes aufweisen, wobei die freien Enden vorzugsweise Spitzen (17, 18) aufweisen.

6. Sensor oder Sensorelement nach Anspruch 5, **dadurch gekennzeichnet, dass** die freien Enden eine dielektrische Beschichtung zum Schutz vor Korrosion aufweisen.

7. Sensor oder Sensorelement nach Anspruch 5 oder 6, **dadurch gekennzeichnet, dass** die freien Enden der beiden Hochspannungselektroden (12, 13) einen ersten Abstand zueinander aufweisen, wobei der erste Abstand 0,3 mm bis 10 mm, insbesondere 1 mm bis 5 mm, beträgt.

8. Sensor oder Sensorelement nach Anspruch 7, **dadurch gekennzeichnet, dass** die Widerstandsmessstruktur (11) einen Abschluss in Strömungsrichtung (11a) aufweist, wobei der Abschluss einen zweiten Abstand zu den freien Enden der Hochspannungselektroden (12, 13) aufweist, wobei der zweite Abstand größer ist als der erste Abstand.

9. Sensor oder Sensorelement nach einem der vorhergehenden Ansprüche, **dadurch gekennzeichnet, dass** die Hochspannungselektroden (12, 13) durch Drähte (19, 20) gebildet sind.

10. Sensor oder Sensorelement nach Anspruch 9, **dadurch gekennzeichnet, dass** die Drähte (19, 20) jeweils einen Durchmesser von 0,01 mm bis 3 mm, insbesondere von 0,02 mm bis 1 mm, insbesondere 0,03 mm bis 0,6 mm, aufweisen.

11. Sensor oder Sensorelement nach Anspruch 9 oder 10, **dadurch gekennzeichnet, dass** die Spitzen (17, 18) der freien Enden der Drähte (19, 20) einen Krümmungsradius jeweils von 0,1 µm bis 100 µm, insbesondere von 0,2 µm bis 30 µm, insbesondere 0,3 µm bis 10 µm, aufweisen.

12. Sensor oder Sensorelement nach einem der Ansprüche 1 bis 9, **dadurch gekennzeichnet, dass** die Hochspannungselektroden (12, 13) durch zweidimensionale Elektroden (21, 22) gebildet sind.

13. Sensor oder Sensorelement nach Anspruch 12, **dadurch gekennzeichnet, dass** die zweidimensionalen Elektroden (21, 22) einzeln oder gemeinsam in die Passivierungsschicht (16) integriert sind.

14. Sensor oder Sensorelement nach einem der Ansprüche 12 oder 13, **dadurch gekennzeichnet, dass** die zweidimensionalen Elektroden (21, 22) eine Dicke von 10 nm bis 10 µm, bevorzugt von 100 nm bis 5 µm, aufweisen.

15. Sensor oder Sensorelement nach einem der vorhergehenden Ansprüche, **dadurch gekennzeichnet, dass** die Widerstandsmessstruktur (11) zwei ineinandergreifende Heizschleifen aufweist oder das Substrat mit der Widerstandsmessstruktur (11) mindestens eine Heizschleife aufweist.

16. Sensor oder Sensorelement nach einem der vorhergehenden Ansprüche, **dadurch gekennzeichnet, dass** das Substrat (10) eine Saugelektrode (23) aufweist.

17. Sensor oder Sensorelement nach Anspruch 16, **dadurch gekennzeichnet, dass** die Widerstandsmessstruktur (11) zwischen der Saugelektrode (23) und den Hochspannungselektroden (12, 13) angeordnet ist, wobei die Saugelektrode (23) vorzugsweise auf der Unterseite des Substrates (10) angeordnet ist.

18. Sensorsystem mit wenigstens einem Sensor oder Sensorelement nach Anspruch 1, **dadurch gekennzeichnet, dass** die Hochspannungselektroden (12, 13) an eine oder mehrere Hochspannungsquellen angeschlossen sind, um im Messbetrieb unterschiedliche Spannungspotentiale an die Hochspannungselektroden (12, 13) anzulegen.

19. Verfahren zur Herstellung eines Sensors oder Sensorelements nach Anspruch 1, bei dem die Widerstandsmessstruktur (11) auf das Substrat (10) aufgebracht und die Hochspannungselektroden (12, 13) zumindest im Anströmbereich (13) in einer Ebene oberhalb der Widerstandsmessstruktur (11) angeordnet und fixiert werden.

20. Verwendung eines Sensors oder Sensorelements nach Anspruch 1 im Abgasstrang eines Verbrennungsmotors.
